# EUROPÄISCHE PATENTSCHRIFT

(11) **EP 2 663 468 B1**
(45) Veröffentlichungstag und Bekanntmachung des Hinweises auf die Patenterteilung: **18.03.2020**
(21) Anmeldenummer: 11801984.3
(22) Anmeldetag: 16.12.2011
(51) Int. Cl.: B60L 53/00, B60L 1/02, B60L 58/20

(54) **VERFAHREN ZUM BETRIEB EINER BORDNETZSTRUKTUR EINES KRAFTFAHRZEUGS**
METHOD FOR OPERATING AN ONBOARD POWER SUPPLY SYSTEM OF A MOTOR VEHICLE
PROCÉDÉ DE FONCTIONNEMENT D'UN SYSTEME D'ALIMENTATION ELECTRIQUE EMBARQUEE D'UN VÉHICULE À MOTEUR

(30) Priorität: 12.01.2011 DE 102011008376
(43) Veröffentlichungstag der Anmeldung: 20.11.2013
(73) Patentinhaber: Audi AG, 85045 Ingolstadt (DE)
(72) Erfinder: SCHALLI, Niklas, 81825 München (DE); HAECKER, Holger, 86579 Waidhofen (DE)
(74) Vertreter: Herbst, Matthias Heinz
(86) Internationale Anmeldenummer: PCT/EP2011/006368
(87) Internationale Veröffentlichungsnummer: WO 2012/095145

(56) Entgegenhaltungen:
- EP-A1- 2 255 990
- EP-A1- 2 255 990
- WO-A1-2007/096720
- WO-A1-2007/096720
- DE-A1-102005 002 401
- DE-A1-102008 010 097
- DE-A1-102008 010 097
- DE-T2- 60 033 861

## Beschreibung

Die Erfindung betrifft ein Verfahren zum Betrieb einer Bordnetzstruktur eines Kraftfahrzeugs, welche Bordnetzstruktur wenigstens zwei elektrische Netze mit unterschiedlichen Netzspannungen aufweist, wobei ein Hochvoltnetz zur Leistungsversorgung wenigstens eines Niedervoltnetzes mit einer im Vergleich zum Hochvoltnetz niedrigeren Netzspannung eine bestimmte Leistungsmenge an das wenigstens eine Niedervoltnetz abgibt, wobei an jedem Netz wenigstens eine Netzkomponente, insbesondere ein elektrischer Verbraucher, angeschlossen ist und das Hochvoltnetz wenigstens eine an dieses angeschlossene Hochvoltbatterie aufweist.

Es sind Kraftfahrzeuge, insbesondere über einen elektrischen Antrieb verfügende Elektrokraftfahrzeuge, mit einer Bordnetzstruktur mit zwei oder mehr parallelen elektrischen Netzen bekannt, wobei sich die Netze in ihren Netzspannungen unterscheiden. Beispielsweise kann ein Hochvoltnetz, an welchem z. B. ein Antriebsaggregat angeschlossen ist, eine Netzspannung von 72 V und ein Niedervoltnetz, an dem z. B. unterschiedliche elektrische Verbraucher wie Unterhaltungs- oder Informationseinrichtungen für Fahrzeuginsassen oder dergleichen angeschlossen sind, eine Netzspannung von 12 V aufweisen. Grundsätzlich versorgt das Hochvoltnetz das oder wenigstens ein Niedervoltnetz insbesondere auch während des Ladevorgangs der Hochvoltbatterie des Hochvoltnetzes mit einer bestimmten Menge elektrischer Leistung zum Betrieb der am Niedervoltnetz angeschlossenen Netzkomponenten respektive elektrischen Verbraucher bzw. erfolgt über die hochvoltnetzseitig an das Niedervoltnetz abgegebene Leistungsmenge auch der Ladevorgang einer niedervoltnetzseitig angeschlossenen Niedervoltbatterie.

Bei bekannten Verfahren zum Betrieb einer Bordnetzstruktur ist es möglich, dass während des Ladevorgangs der Hochvoltbatterie ein Leistungsmangel bzw. eine Leistungsunterdeckung im Hochvoltnetz auftritt. Dieser ist insbesondere bedingt durch die an das Niedervoltnetz abgegebene Leistungsmenge respektive durch den Leistungsverbrauch der im Niedervoltnetz angeschlossenen Netzkomponenten. Konkret kann beispielsweise die Hochvoltbatterie des Hochvoltnetzes während des Ladevorgangs überhitzen, da eine die Hochvoltbatterie während des Ladevorgangs kühlende Kühlvorrichtung nicht ausreichend mit elektrischer Leistung versorgt werden kann.

In WO 2007/096720 A1 wird ein elektrisch angetriebenes Fahrzeug beschrieben, welches eine Hochvoltbatterie zum Betrieb einer elektrischen Maschine, eine Solarbatterie, einen Ladegleichspannungswandler, welche von der Solarbatterie erzeugte elektrische Leistung an die Hochvoltbatterie überträgt, sowie eine Niederspannungsbatterie umfasst. Die Niederspannungsbatterie ist mit der Hochvoltbatterie über einen Gleichspannungswandler verbunden. Weiterhin ist ein dritter Gleichspannungswandler vorgesehen, welcher die von der Solarbatterie erzeugte Spannung in die Spannung der Niedervoltbatterie wandelt. Bei einem Abschalten der Zündung werden zwei Relais geöffnet, welche die Hochvoltbatterie mit dem das Niederspannungsnetz versorgenden Gleichspannungswandler verbinden, um das Niederspannungsnetz von der Hochvoltbatterie abzukoppeln. Weiterhin wird eine über das Niedervoltnetz betriebene Überwachungseinheit abgeschaltet, um ein ungewünschtes Entladen der Niederspannungsbatterie des Niederspannungsnetzes im geparkten Zustand des Kraftfahrzeuges insbesondere bei einer unzureichenden von der Solarbatterie bereitgestellten Leistung zu verhindern.

DE 10 2005 002 401 A1 beschreibt ein Kraftfahrzeugbordnetz mit einer 12 V-Batterie sowie einer weiteren Batterie mit einer Sekundärspannung von 42 V. Das Kraftfahrzeugbordnetz ist in zwei Teilnetze aufgeteilt, von denen eines eine Nennspannung von 14 V und das andere eine Nennspannung von 42 V aufweist. Zwischen den beiden Teilnetzen ist über einen Energiewandler Energie transportierbar. Über eine zentrale Recheneinheit wird die verfügbare Leistung, welche von den beiden Batterien und gegebenenfalls dem Energiewandler zur Verfügung gestellt werden kann, gleichmäßig an verschiedene Endverbraucher und gegebenenfalls an die Energiespeicher verteilt, ohne dass es zu einer Überlastung des Kraftfahrzeugbordnetzes kommt. Dazu ist jedem der zu versorgenden Verbraucher in Abhängigkeit von einem Gesamtzustand des Kraftfahrzeuges eine Priorität zugeordnet.

Der Erfindung liegt daher das Problem zugrunde, ein verbessertes Verfahren zum Betrieb einer Bordnetzstruktur anzugeben.

Das Problem wird erfindungsgemäß durch ein Verfahren nach Anspruch 1 und durch ein Kraftfahrzeug nach Anspruch 7 gelöst.

Gemäß dem Verfahren wird demnach wenigstens während des Ladevorgangs der Hochvoltbatterie stets der aktuelle Leistungsbedarf im Hochvoltnetz erfasst und mit der insgesamt hochvoltnetzseitig zur Verfügung stehenden Leistungsmenge im Sinne einer Bilanzierung verglichen. Zur Ermittlung des aktuellen Leistungsbedarfs im Hochvoltnetz wird der zu deren Betrieb erforderliche Leistungsbedarf aller hochvoltnetzseitig angeschlossener Netzkomponenten sowie die an das wenigstens eine Niedervoltnetz abzugebende bestimmte Leistungsmenge berücksichtigt. Überschreitet der hochvoltnetzseitige Leistungsbedarf die im Hochvoltnetz insgesamt zur Verfügung stehende Leistungsmenge, liegt hochvoltnetzseitig ein Leistungsmangel respektive eine Leistungsunterdeckung vor. Zur Kompensation des Leistungsmangels wird in dem wenigstens einen Niedervoltnetz die Leistung wenigstens einer dort angeschlossenen Netzkomponente reduziert, so dass der durch den Betrieb der wenigstens einen niedervoltnetzseitigen Netzkomponente bedingte Leistungsbedarf des Niedervoltnetzes reduziert wird. Entsprechend wird die von dem Hochvoltnetz an das Niedervoltnetz gelieferte Leistungsmenge ebenfalls reduziert. Im Extremfall wird die oder wenigstens eine an das Niedervoltnetz angeschlossene Netzkomponente komplett abgeschaltet respektive das Niedervoltnetz nicht mehr über das Hochvoltnetz mit elektrischer Leistung versorgt. Derart kann der Anteil an elektrischer Leistung, der nun nicht mehr an das Niedervoltnetz abgegeben wird, im Hochvoltnetz zum Betrieb einer oder mehrerer dort angeschlossener Netzkomponenten verwendet werden.

Es ist auch denkbar, bereits bei Annäherung des aktuellen Leistungsbedarfs im Hochvoltnetz an die dort insgesamt zur Verfügung stehende Leistungsmenge entsprechend die Leistung der wenigstens einen in dem wenigstens einen Niedervoltnetz angeschlossenen Netzkomponente und die von dem Hochvoltnetz an das wenigstens eine Niedervoltnetz abgegebene Leistungsmenge wenigstens teilweise zu reduzieren. Hierbei können vorgegebene oder vorgebbare Werte für das Verhältnis von aktuellem hochvoltnetzseitigen Leistungsbedarf und insgesamt hochvoltnetzseitig zur Verfügung stehender Leistung verwendet werden. So kann beispielsweise für den Fall, dass der aktuelle Leistungsbedarf im Hochvoltnetz 90% der insgesamt hochvoltnetzseitig zur Verfügung stehenden Leistung beträgt, bereits eine Reduzierung der Leistung der wenigstens einen im Niedervoltnetz angeschlossenen Netzkomponente respektive eine Reduzierung der an das wenigstens eine Niedervoltnetz abgegebenen Leistungsmenge erfolgen. Selbstverständlich ist zur Durchführung des Verfahrens vorteilhaft sowohl hochvoltnetzseitig als auch niedervoltnetzseitig jeweils wenigstens eine Steuereinrichtung vorgesehen, wie im Folgenden näher erläutert wird.

Jedem Netz ist eine Steuereinrichtung zur Steuerung der Netzkomponenten und zur Ermittlung des aktuellen Leistungsverbrauchs des Netzes zugeordnet, wobei die Steuereinrichtung des Hochvoltnetzes bei einem während des Ladevorgangs der Hochvoltbatterie im Hochvoltnetz auftretenden Leistungsmangel eine den Leistungsmangel im Hochvoltnetz betreffende Information an die Steuereinrichtung wenigstens eines Niedervoltnetzes abgibt, wobei die Steuereinrichtung des wenigstens eines Niedervoltnetzes unter zusätzlicher Berücksichtigung wenigstens einer den Leistungsverbrauch wenigstens einer Netzkomponente des Niedervoltnetzes betreffenden Randbedingung die Leistung wenigstens einer Netzkomponente des Niedervoltnetzes reduziert. Die den jeweiligen Netzen zugeordneten Steuereinrichtungen sind kommunizierend miteinander verbunden, das heißt kommunizieren zum Austausch wenigstens der den Leistungsmangel im Hochvoltnetz betreffenden Information bevorzugt direkt miteinander. Entsprechend kann ein über eine hochvoltnetzseitig vorgesehene Steuereinrichtung erfasster Leistungsmangel respektive die im Hochvoltnetz zur Kompensation des Leistungsmangels erforderliche Leistungsmenge betragsmäßig in Form der den Leistungsmangel im Hochvoltnetz betreffenden Information an eine Steuereinrichtung eines Niedervoltnetzes geleitet werden. Die niedervoltnetzseitige Steuereinrichtung steuert daraufhin eine oder mehrere niedervoltnetzseitige Netzkomponenten derart an, dass diese entsprechend in ihrer Leistung reduziert werden, so dass die Steuereinrichtung des Hochvoltnetzes den Betrag der an das Niedervoltnetz abzugebenden Leistungsmenge entsprechend reduzieren kann.

Grundsätzlich wird die Leistungsreduzierung der wenigstens einen niedervoltnetzseitig angeschlossenen Netzkomponente unter zusätzlicher Berücksichtigung wenigstens einer den Leistungsverbrauch wenigstens einer Netzkomponente des Niedervoltnetzes betreffenden Randbedingung durchgeführt. Die Randbedingung stellt eine Regelliste dar, wonach beispielsweise festgelegt wird, wie die Leistung der wenigstens einen in dem wenigstens einen Niedervoltnetz angeschlossenen Netzkomponente und die von dem Hochvoltnetz an das wenigstens eine Niedervoltnetz abgegebene Leistungsmenge wenigstens teilweise reduziert wird. Mithin stellt die Steuereinrichtung des jeweiligen Niedervoltnetzes anhand der Randbedingungen selbständig fest, welche Netzkomponenten wie in ihrer Leistung reduziert respektive abgeschaltet werden, das heißt, welche Maßnahmen zur Leistungsreduzierung in einem gegebenen Fall realisiert werden. Die Randbedingungen können werks- und/oder benutzerseitig vorgegeben werden.

Es ist in diesem Zusammenhang denkbar, als Randbedingung den jeweiligen Netzkomponenten des wenigstens einen Niedervoltnetzes von der Steuereinrichtung zugewiesene Prioritäten zu verwenden. Entsprechend kann beispielsweise durch die den jeweiligen niedervoltnetzseitig angeschlossenen Netzkomponenten zugeordneten Prioritäten festgelegt sein, in welcher Reihenfolge im Falle von mehreren niedervoltnetzseitig angeschlossenen Netzkomponenten die Leistung reduziert wird bzw. in welcher Reihenfolge niedervoltnetzseitige Netzkomponenten abgeschaltet werden. Es ist auch denkbar, bestimmte niedervoltnetzseitige Netzkomponenten nicht zu priorisieren, so dass diese jedenfalls mit elektrischer Leistung versorgt und somit betrieben werden können. Hierunter können beispielsweise sicherheitsrelevante Netzkomponenten des Niedervoltnetzes wie z. B. eine Alarmanlage oder kraftfahrzeugseitig vorgesehene Sende- und/oder Empfangseinrichtungen fallen.

Die Priorisierung erfolgt bevorzugt in Abhängigkeit einer durch die Leistungsreduzierung bedingten Komforteinschränkung eines oder mehrerer Fahrzeuginsassen, wobei die mit der größten Komforteinschränkung verbundenen Netzkomponenten zuletzt in ihrer Leistung reduziert werden. Entsprechend ist die Leistungsreduzierung der niedervoltnetzseitig angeschlossenen Netzkomponenten für den oder die Fahrzeuginsassen kaum spürbar. Komfortrelevante Netzkomponenten, welche demnach zuletzt abgeschaltet werden, können beispielsweise Unterhaltungs- und/oder Informationseinrichtungen, welche dem oder den Fahrzeuginsassen ein Unterhaltungs- und/oder Informationsangebot liefern, oder eine Sitzheizung sein. Mithin werden also von dem oder den Fahrzeuginsassen nicht unmittelbar im Betrieb erkennbare Netzkomponenten vorrangig in ihrer Leistung reduziert bzw. abgeschaltet.

Ferner ist es denkbar, als Randbedingung vorzusehen, wenigstens eine in dem wenigstens einen Niedervoltnetz angeschlossene Niedervoltbatterie nicht zu entladen. Die Niedervoltbatterie hält derart trotz der reduzierten an das Niedervoltnetz abgegebenen Leistungsmenge stets wenigstens einen vorgegebenen oder vorgebbaren Mindestladezustand ein.

Zur Leistungsreduzierung in wenigstens einem Niedervoltnetz kann es zudem vorgesehen sein, den Ladestrom wenigstens einer in dem wenigstens einen Niedervoltnetz angeschlossenen Niedervoltbatterie zu begrenzen. Beispielsweise wäre es ohne Ladestrombegrenzung möglich, dass eine elektrische Leistung von bis zu 1,5 kW an eine Niedervoltbatterie abgegeben wird, weshalb auch durch eine entsprechende Ladestrombegrenzung einer Niedervoltbatterie der Leistungsverbrauch des wenigstens einen Niedervoltnetzes reduziert werden kann.

Die durch die Reduzierung der an das wenigstens eine Niedervoltnetz abgegebenen Leistungsmenge in dem Hochvoltnetz freiwerdende Leistungsmenge kann beispielsweise wenigstens einer wenigstens einer Hochvoltbatterie zugeordneten, in dem Hochvoltnetz als Netzkomponente angeschlossenen Kühlvorrichtung zugeführt werden. Sonach ist dem eingangs beschriebenen Fall der Überhitzung der Hochvoltbatterie während des Ladevorgangs bedingt durch die nicht ausreichende Kühlung durch die Kühlvorrichtung Rechnung getragen. Es steht hochvoltnetzseitig ausreichend Leistung zum Betrieb der Kühlvorrichtung zur Verfügung, sonach wird die Hochvoltbatterie während des Ladevorgangs hinreichend gekühlt und insbesondere nicht durch Überhitzung beschädigt.

Die Erfindung richtet sich zusätzlich auf ein Kraftfahrzeug gemäß Anspruch 7. Dabei ist das Kraftfahrzeug zur Durchführung des erfindungsgemäßen Verfahrens, wie oben beschrieben, ausgebildet.

Entsprechend können während des Ladevorgangs wenigstens einer in einem Hochvoltnetz angeschlossenen Hochvoltbatterie gegebenenfalls auftretende Leistungsmängel im Hochvoltnetz kompensiert werden, indem die Leistung der wenigstens einen in dem wenigstens einem Niedervoltnetz angeschlossenen Netzkomponente und die von dem Hochvoltnetz an das wenigstens eine Niedervoltnetz abgegebene Leistungsmenge wenigstens teilweise reduziert wird.

Das Kraftfahrzeug ist bevorzugt ein Elektrokraftfahrzeug oder Hybridkraftfahrzeug mit einem wenigstens teilweisen elektrischen Antrieb.

Erfindungsgemäß ist jedem Netz eine Steuereinrichtung zur Steuerung der wenigstens einen Netzkomponente und zur Ermittlung des aktuellen Leistungsverbrauchs des Netzes zugeordnet. Die Steuereinrichtungen der Netze sind zur, insbesondere direkten, Kommunikation miteinander ausgebildet, das heißt, diese können unterschiedliche Informationen senden und empfangen. Folglich sind die Steuereinrichtungen über wenigstens ein Kommunikationsmittel miteinander verbunden.

Weitere Vorteile der Erfindung ergeben sich aus den im folgenden beschriebenen Ausführungsbeispielen sowie anhand der Zeichnungen. Dabei zeigen:
- Fig. 1: eine Prinzipdarstellung einer Bordnetzstruktur eines Kraftfahrzeugs; und
- Fig. 2: eine Prinzipdarstellung des Ablaufs des Verfahrens.

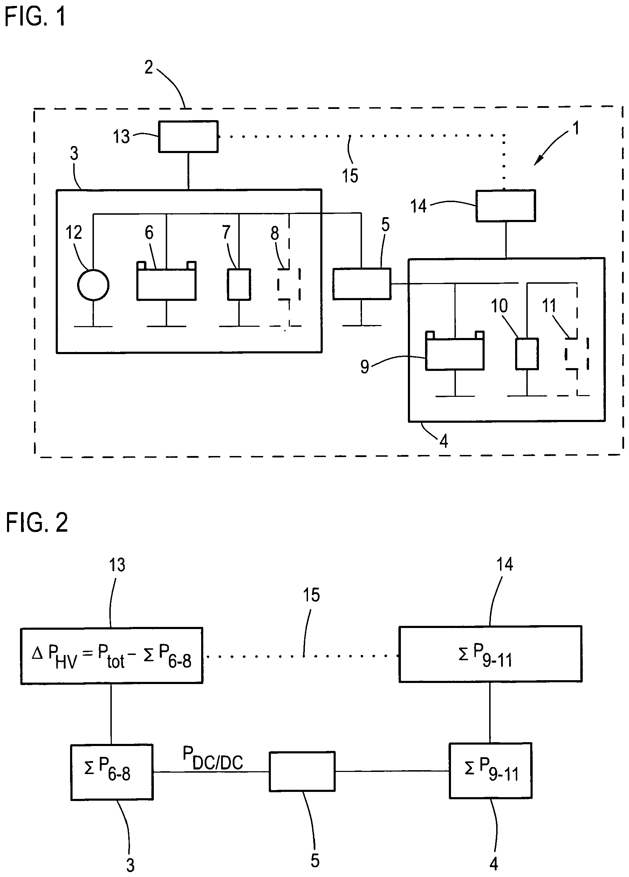

Fig. 1 zeigt eine Prinzipdarstellung einer Bordnetzstruktur 1 eines als Elektrokraftfahrzeug ausgebildeten Kraftfahrzeugs 2, welches Kraftfahrzeug 2 lediglich durch die strichlinierte Umrandung der Bordnetzstruktur 1 angedeutet ist. Die Bordnetzstruktur 1 weist zwei elektrische Netze 3, 4 mit unterschiedlichen Netzspannungen auf, wobei ein Hochvoltnetz 3 z. B. eine Netzspannung von 72 V und ein Niedervoltnetz 4 z. B. eine Netzspannung von 12 V aufweist. Das Hochvoltnetz 3 versorgt das Niedervoltnetz 4 über einen DC/DC-Wandler 5 mit elektrischer Energie, das heißt, es wird aus der in dem Hochvoltnetz 3 zur Verfügung stehenden Gesamtleistungsmenge eine bestimmte Leistungsmenge an das Niedervoltnetz 4 abgegeben. Sowohl hochvoltnetzseitig als auch niedervoltnetzseitig sind unterschiedliche Netzkomponenten 6 - 11 angeschlossen. Dabei sind hochvoltnetzseitig eine Hochvoltbatterie 6 sowie verschiedene elektrische Verbraucher 7, 8 vorgesehen, wobei durch die strichlinierte Darstellung des Verbrauchers 8 symbolisiert wird, dass der Verbraucher 8 gegebenenfalls auch für eine Mehrzahl an elektrischen Verbrauchern stehen kann. Analog sind niedervoltnetzseitig eine Niedervoltbatterie 9 sowie entsprechende Verbraucher 10, 11 vorgesehen, wobei der elektrische Verbraucher 11 wiederum symbolisiert durch die strichlinierte Darstellung gegebenenfalls für eine Mehrzahl an elektrischen Verbrauchern stehen kann. Im Hochvoltnetz 3 ist ferner ein Ladegerät 12 angeschlossen, mithin befindet sich das Kraftfahrzeug 2 in einem ladebereit abgestellten Zustand, in dem die Hochvoltbatterie 6 über das Ladegerät 12 geladen wird.

Sowohl dem Hochvoltnetz 3 als auch dem Niedervoltnetz 4 ist jeweils eine Steuereinrichtung 13, 14 zugeordnet. Die Steuereinrichtung 13 des Hochvoltnetzes 3 steuert den Betrieb und somit den Leistungsverbrauch der hochvoltnetzseitig angeschlossenen Netzkomponenten 6 - 8 und ermittelt zusätzlich den aktuellen Leistungsverbrauch des Hochvoltnetzes 3. Entsprechend steuert die Steuereinrichtung 14 des Niedervoltnetzes 4 den Betrieb und somit den Leistungsverbrauch der niedervoltnetzseitig angeschlossenen Netzkomponenten 9 - 11 und ermittelt den aktuellen Leistungsverbrauch der niedervoltnetzseitig angeschlossenen Netzkomponenten 9 - 11. Die Steuereinrichtungen 13, 14 sind über eine Kommunikationsverbindung 15 zur direkten Kommunikation miteinander verbunden.
Die Steuereinrichtung 13 des Hochvoltnetzes 3 vergleicht ferner die im Hochvoltnetz 3 zur Verfügung stehende Gesamtleistung mit dem aktuellen, durch den Betrieb der hochvoltnetzseitig angeschlossenen Netzkomponenten 6 - 8 entstehenden Leistungsbedarf im Sinne einer Bilanzierung des im Hochvoltnetz 3 zur Verfügung stehenden Leistungsangebots und der aktuellen hochvoltnetzseitig bestehenden Leistungsnachfrage. Hierbei wird auch die vom Hochvoltnetz 3 über den DC/DC-Wandler 5 an das Niedervoltnetz 4 abgegebene Leistungsmenge berücksichtigt.

Anhand von Fig. 2 wird der prinzipielle Ablauf des Verfahrens an einem konkreten Beispiel erläutert. Ausgehend von dem Ladevorgang der hochvoltnetzseitig angeschlossenen Hochvoltbatterie 6 über das mit einer externen Energiequelle (nicht gezeigt) verbundene Ladegerät 12 steht im Hochvoltnetz 3 beispielsweise insgesamt eine elektrische Leistung Pₜₒₜ von insgesamt 3 kW zur Verfügung. Es ist zunächst noch über die hochvoltnetzseitige Steuereinrichtung 13 festgelegt, dass aus dem Hochvoltnetz 3 eine Leistungsmenge P_{DC/DC} von 2 kW über den DC/DC-Wandler 5 an das Niedervoltnetz 4 zum Betrieb der dort angeschlossenen Netzkomponenten 10, 11 respektive zum Laden der Niedervoltbatterie 9 abgegeben wird, so dass im Hochvoltnetz 3 zum Betrieb der dort angeschlossenen Netzkomponenten 7, 8 letztlich eine Leistungsmenge von 1 kW zur Verfügung steht. Wird nun z. B. zur Kühlung der Hochvoltbatterie 6 über eine Netzkomponente 7 in Form einer entsprechenden Kühleinrichtung eine Leistungsmenge von wenigstens 2 kW angefordert, ergibt die Leistungsbilanz ΔP_{HV} im Hochvoltnetz 3, welche sich aus der Differenz der gesamten hochvoltnetzseitig zur Verfügung stehenden Leistung Pₜₒₜ und der tatsächlich hochvoltnetzseitig benötigten Leistung Σ P₆₋₉ ergibt, einen Betrag von -1 kW, entsprechend liegt hochvoltnetzseitig ein Leistungsmangel von 1 kW vor.

Der Leistungsmangel wird im Rahmen der Erstellung der Leistungsbilanz ΔP_{HV} von der hochvoltnetzseitigen Steuereinrichtung 13 erfasst und eine den Leistungsmangel im Hochvoltnetz 3 betreffende Information über die Kommunikationsverbindung 15 an die Steuereinrichtung 14 des Niedervoltnetzes 4 gegeben, woraufhin die Steuereinrichtung 14 selbständig entsprechende Netzkomponenten 9 - 11 wenigstens teilweise in ihrer Leistung reduziert, so dass sich insgesamt der niedervoltnetzseitige Leistungsverbrauch Σ P₉₋₁₁ wenigstens um die im Hochvoltnetz 3 benötigte Leistungsmenge von 1 kW verringert. Gleichermaßen reduziert die Steuereinrichtung 13 des Hochvoltnetzes 3 die über den DC/DC-Wandler 5 an das Niedervoltnetz 4 abgegebene Leistungsmenge P_{DC/DC} um 1 kW, so dass die Leistungsbilanz im Hochvoltnetz 3 nicht mehr negativ ausfällt, sondern ausgeglichen ist. Folglich steht im Hochvoltnetz 3 ausreichend Leistung für den Betrieb der hochvoltnetzseitigen Netzkomponenten 7, 8, das heißt insbesondere für den Betrieb der der Hochvoltbatterie 6 zugeordneten Kühlvorrichtung zur Verfügung. Mithin wird die hochvoltnetzseitig durch die Reduzierung der an das Niedervoltnetz 4 abgegebenen Leistungsmenge P_{DC/DC} freiwerdende Leistungsmenge der der Hochvoltbatterie 6 zugeordneten, in dem Hochvoltnetz 3 als Netzkomponente 7 angeschlossenen Kühlvorrichtung zugeführt. Selbstverständlich gilt das erfindungsgemäße Prinzip gleichermaßen für andere, hochvoltnetzseitige Netzkomponenten 8, sofern diese aufgrund eines akuten hochvoltnetzseitigen Leistungsmangels nicht ordnungsgemäß betrieben werden können.

Die niedervoltnetzseitige Steuereinrichtung 14 berücksichtigt bei der Reduzierung des Leistungsverbrauchs Σ P₉₋₁₁ wenigstens eine den Leistungsverbrauch wenigstens einer Netzkomponente 9 - 11 des Niedervoltnetzes 4 betreffende Randbedingung. Bevorzugt werden dabei als Randbedingung den jeweiligen Netzkomponenten 9 - 11 des Niedervoltnetzes 4 von der Steuereinrichtung 14 zugewiesene Prioritäten verwendet. Hierbei kann es beispielsweise sein, dass die Priosierung in Abhängigkeit einer durch die Leistungsreduzierung bedingten Komforteinschränkung eines oder mehrerer Fahrzeuginsassen des Kraftfahrzeugs 2 erfolgt, wobei die mit der größten Komforteinschränkung verbundenen Netzkomponenten 11 zuletzt in ihrer Leistung reduziert werden. Demnach kann etwa eine niedervoltnetzseitig angeschlossene Unterhaltungs- und/oder Informationseinrichtung zuletzt in ihrer Leistung reduziert bzw. abgeschaltet werden, so dass die insgesamt im Rahmen des erfindungsgemäßen Verfahrens durchgeführte Reduzierung des Leistungsverbrauchs Σ P₉₋₁₁ des Niedervoltnetzes 4 für den oder die Fahrzeuginsassen kaum spürbar ist. Ferner ist bevorzugt zusätzlich vorgesehen, zur Leistungsreduzierung in dem Niedervoltnetz 4 den Ladestrom der niedervoltnetzseitigen Niedervoltbatterie 9 zu begrenzen, da auch über diese Maßnahme eine erhebliche Reduzierung des Leistungsverbrauchs Σ P₉₋₁₁ des Niedervoltnetzes 4 realisiert werden kann. Sämtliche im Niedervoltnetz 4 zur Reduzierung des Leistungsverbrauchs Σ P₉₋₁₁ getroffenen Maßnahmen erfolgen zudem bevorzugt unter der Prämisse, dass die Niedervoltbatterie 9 nicht entladen wird.

Nach Abschluss des Ladevorgangs der Hochvoltbatterie 6 kann grundsätzlich zu der ursprünglichen Konfiguration respektive dem ursprünglichen Leistungsverbrauch Σ P₉₋₁₁ der niedervoltnetzseitigen Netzkomponenten 9 - 11 zurückgekehrt werden. Durch den Wegfall des Leistungsbedarfs der hochvoltnetzseitigen Kühlvorrichtung entsteht in der Leistungsbilanz des Hochvoltnetzes 3 nunmehr ein Leistungsüberschuss von 1 kW. Die überschüssige Leistungsmenge von 1 kW kann dann, soweit im Hochvoltnetz 3 aktuell nicht anderweitig verwendbar, über den DC/DC-Wandler 5 wenigstens teilweise an das Niedervoltnetz 4 abgegeben werden. Mithin kann auch die Steuereinrichtung 14 des Niedervoltnetzes 4 eine entsprechende, einen Leistungsbedarf im Niedervoltnetz 4 betreffende Information an die Steuereinrichtung 13 des Hochvoltnetzes 3 abgeben bzw. einen bestimmten Leistungsbedarf vom Hochvoltnetz 3 anfordern, woraufhin das Hochvoltnetz 3 soweit ein hochvoltnetzseitiger Leistungsüberschuss besteht, eine entsprechende zusätzliche Leistungsmenge an das Niedervoltnetz 4 abgibt.

## Patentansprüche

1. Verfahren zum Betrieb einer Bordnetzstruktur eines Kraftfahrzeugs (2), welche Bordnetzstruktur (1) wenigstens zwei elektrische Netze (3, 4) mit unterschiedlichen Netzspannungen aufweist, wobei ein Hochvoltnetz (3) zur Leistungsversorgung wenigstens eines Niedervoltnetzes (4) mit einer im Vergleich zum Hochvoltnetz (3) niedrigeren Netzspannung eine bestimmte Leistungsmenge an das wenigstens eine Niedervoltnetz (4) abgibt, wobei an jedem Netz wenigstens eine Netzkomponente (6 - 11), insbesondere ein elektrischer Verbraucher, angeschlossen ist und das Hochvoltnetz (3) wenigstens eine an dieses angeschlossene Hochvoltbatterie (6) aufweist, wobei bei einem während des Ladevorgangs der Hochvoltbatterie (6) im Hochvoltnetz (3) auftretenden Leistungsmangel die Leistung wenigstens einer der wenigstens einen in dem wenigstens einen Niedervoltnetz angeschlossenen Netzkomponente (9 - 11) und die von dem Hochvoltnetz (3) an das wenigstens eine Niedervoltnetz (4) abgegebene Leistungsmenge wenigstens einer der wenigstens einen Netzkomponente (6 - 8) reduziert wird,
**dadurch gekennzeichnet, dass**
jedem Netz (3, 4) eine Steuereinrichtung (13, 14) zur Steuerung der Netzkomponenten (6 - 11) und zur Ermittlung des aktuellen Leistungsverbrauchs des Netzes (3, 4) zugeordnet ist, wobei die Steuereinrichtung (13) des Hochvoltnetzes (3) bei einem während des Ladevorgangs der Hochvoltbatterie (6) im Hochvoltnetz (3) auftretenden Leistungsmangel eine den Leistungsmangel im Hochvoltnetz (3) betreffende Information an die Steuereinrichtung (14) des wenigstens einen Niedervoltnetzes (4) abgibt, wobei die Steuereinrichtung (14) des wenigstens einen Niedervoltnetzes (4) unter zusätzlicher Berücksichtigung wenigstens einer den Leistungsverbrauch wenigstens einer Netzkomponente (9 - 11) des Niedervoltnetzes (4) betreffenden Randbedingung die Leistung wenigstens einer Netzkomponente (9 - 11) des Niedervoltnetzes (4) reduziert.

2. Verfahren nach Anspruch 1,
**dadurch gekennzeichnet,**
**dass** als Randbedingung den jeweiligen Netzkomponenten (9 - 11) des wenigstens einen Niedervoltnetzes (4) von der Steuereinrichtung (14) zugewiesene Prioritäten verwendet werden.

3. Verfahren nach Anspruch 2,
**dadurch gekennzeichnet,**
**dass** die Priorisierung in Abhängigkeit einer durch die Leistungsreduzierung bedingten Komforteinschränkung eines oder mehrerer Fahrzeuginsassen erfolgt, wobei die mit der größten Komforteinschränkung verbundenen Netzkomponenten (9 - 11) zuletzt in ihrer Leistung reduziert werden.

4. Verfahren nach einem der vorangehenden Ansprüche,
**dadurch gekennzeichnet,**
**dass** als Randbedingung vorgesehen ist, wenigstens eine in dem wenigstens einen Niedervoltnetz (4) angeschlossene Niedervoltbatterie (9) nicht zu entladen.

5. Verfahren nach einem der vorangehenden Ansprüche,
**dadurch gekennzeichnet,**
**dass** zur Leistungsreduzierung in wenigstens einem Niedervoltnetz (4) vorgesehen ist, den Ladestrom wenigstens einer in dem wenigstens einen Niedervoltnetz (4) angeschlossenen Niedervoltbatterie (9) zu begrenzen.

6. Verfahren nach einem der vorangehenden Ansprüche,
**dadurch gekennzeichnet,**
**dass** die durch die Reduzierung der an das wenigstens eine Niedervoltnetz (4) abgegebenen Leistungsmenge in dem Hochvoltnetz (3) freiwerdende Leistungsmenge wenigstens einer wenigstens einer Hochvoltbatterie (6) zugeordneten, in dem Hochvoltnetz (3) als Netzkomponente (7, 8) angeschlossenen Kühlvorrichtung zugeführt wird.

7. Kraftfahrzeug, umfassend eine Bordnetzstruktur (1), einen DC/DC-Wandler (5), ein Ladegerät (12) und zwei über eine Kommunikationsverbindung (15) miteinander verbundene Steuereinrichtungen (13, 14), wobei die Bordnetzstruktur (1) wenigstens zwei elektrische Netze (3, 4) mit unterschiedlichen Netzspannungen aufweist, wobei durch ein Hochvoltnetz (3) zur Leistungsversorgung wenigstens eines Niedervoltnetzes (4) eine bestimmte Leistungsmenge über den DC/DC-Wandler (5) an das wenigstens eine Niedervoltnetz (4) abgibt, wobei an jedem Netz (3, 4) wenigstens eine Netzkomponente (6 - 11), insbesondere ein elektrischer Verbraucher, angeschlossen ist und das Hochvoltnetz (3) wenigstens eine an dieses angeschlossene Hochvoltbatterie (6) aufweist,
wobei
das Kraftfahrzeug (2) dazu ausgebildet ist, bei einem während des Ladevorgangs der Hochvoltbatterie (6) im Hochvoltnetz auftretenden Leistungsmangel die Leistung wenigstens einer der wenigstens einen in dem wenigstens einen Niedervoltnetz (4) angeschlossenen Netzkomponente (9 - 11) und die von dem Hochvoltnetz (3) an das wenigstens eine Niedervoltnetz (4) abgegebene Leistungsmenge wenigstens einer der wenigstens einen Netzkomponente (6 - 8) zu reduzieren,
**dadurch gekennzeichnet, dass**
jedem Netz (3, 4) eine der Steuereinrichtungen (13, 14) zur Steuerung der wenigstens einen Netzkomponente (6 - 11) und zur Ermittlung des aktuellen Leistungsverbrauchs des Netzes (3, 4) zugeordnet ist, wobei die Steuerungseinrichtung (13) des Hochvoltnetzes (3) zur Steuerung des Betriebs und somit des Leistungsverbrauchs der hochvoltnetzseitig angeschlossenen Netzkomponenten (6 - 8) und zu einer Ermittlung des aktuellen Leistungsverbrauchs des Hochvoltnetzes (3) ausgebildet ist und wobei die Steuerungseinrichtung (14) des wenigstens einen Niedervoltnetzes (4) zur Steuerung des Betriebs und somit des Leistungsverbrauchs der niedervoltnetzseitig angeschlossenen Netzkomponenten (9 - 11) ausgebildet ist, wobei die Steuereinrichtung (13) des Hochvoltnetzes (3) weiterhin dazu ausgebildet ist, bei einem während eines Ladevorgangs der Hochvoltbatterie (6) über das Ladegerät (12) im Hochvoltnetz (3) auftretenden Leistungsmangel eine den Leistungsmangel im Hochvoltnetz (3) betreffende Information über die Kommunikationsverbindung (15) an die Steuereinrichtung (14) des wenigstens einen Niedervoltnetzes (4) abzugeben, wobei die Steuereinrichtung (14) des wenigstens einen Niedervoltnetzes (4) weiterhin dazu ausgebildet ist, unter zusätzlicher Berücksichtigung wenigstens einer den Leistungsverbrauch wenigstens einer der Netzkomponenten (9 - 11) des wenigstens einen Niedervoltnetzes (4) betreffenden Randbedingung die Leistung wenigstens einer der Netzkomponenten (9 - 11) des wenigstens einen Niedervoltnetzes (4) zu reduzieren.

## Claims

1. Method for operating an onboard power supply of a motor vehicle (2), which onboard power supply (1) has at least two electrical networks (3, 4) with different network voltages, wherein a high-voltage network (3) for supplying with power at least one low-voltage network (4) with a network voltage which is low in comparison to the high-voltage network (3) submits a specified power quantity to the at least one low-voltage network (4), wherein to each network is connected at least one network component (6 - 11), in particular an electrical load, and the high-voltage network (3) has at least one high-voltage battery (6) attached thereto,
wherein in the case of a deficiency in power occurring during the charging procedure of the high-voltage battery (6) in the high-voltage network (3) the power of at least one of the network components (9 - 11) connected in the at least one low-voltage network and the power quantity of at least one of the at least one network components (6 - 8), submitted by the high-voltage network (3) to the at least one low-voltage network (4), is reduced,
**characterised in that**
to each network (3, 4) is assigned a control device (13, 14) for controlling the network components (6 - 11) and for determining the actual power consumption of the network (3, 4), wherein the control device (13) of the high-voltage network (3) in the case of a deficiency in power occurring during the charging procedure of the high-voltage battery (6) in the high-voltage network (3) submits an item of information regarding the deficiency in power in the high-voltage network (3) to the control device (14) of the at least one low-voltage network (4), wherein the control device (14) of the at least one low-voltage network (4) taking additionally into consideration at least one marginal condition concerning the power consumption of at least one network component (9 - 11) of the low-voltage network (4) reduces the power of at least one network component (9 - 11) of the low-voltage network (4).

2. Method according to claim 1,
**characterised in**
**that** as marginal condition priorities are used which are allocated to the respective network components (9 - 11) of the at least one low-voltage network (4) by the control device (14).

3. Method according to claim 2,
**characterised in**
**that** the prioritisation takes place depending on a comfort restriction, resulting from the power reduction, of one or more vehicle occupants, wherein the network components (9 - 11) connected with the greatest comfort restriction are reduced in their power last.

4. Method according to any of the preceding claims,
**characterised in**
**that** as marginal condition it is provided not to discharge at least one low-voltage battery (9) connected in the at least one low-voltage network (4).

5. Method according to any of the preceding claims,
**characterised in**
**that** for power reduction in at least one low-voltage network (4) it is provided to limit the charging current of at least one low-voltage battery (9) connected in the at least one low-voltage network (4).

6. Method according to any of the preceding claims,
**characterised in**
**that** the power quantity becoming available in the high-voltage network (3) by means of the reduction of the power quantity submitted to the at least one low-voltage network (4) is supplied to at least one cooling device assigned to at least one high-voltage battery (6), connected as network component (7, 8) in the high-voltage network (3).

7. Motor vehicle, including an onboard power supply (1), a DC/DC converter (5), a charging device (12) and two control devices (13, 14) connected with one another via a communication connection (15), wherein the onboard power supply (1) has at least two electrical networks (3, 4) having different network voltages, wherein by means of a high-voltage network (3) for supplying with power at least one low-voltage network (4), a specified power quantity submits via the DC/DC converter (5) to the at least one low voltage network (4), wherein to each network (3, 4) is connected at least one network component (6 - 11), in particular an electrical load, and the high-voltage network (3) has at least one high-voltage battery (6) connected thereto,
wherein
the motor vehicle (2) is configured in the case of a deficiency in power occurring during the charging procedure of the high-voltage battery (6) in the high-voltage network to reduce the power of at least one of the network components (9 - 11) connected in the at least one low-voltage network (4) and the power quantity of at least one of the at least one network components (6 - 8) submitted by the high-voltage network (3) to the at least one low-voltage network (4),
**characterised in that**
to each network (3, 4) is assigned one of the control devices (13, 14) for controlling the at least one network component (6 - 11) and for determining the actual power consumption of the network (3, 4), wherein the control device (13) of the high-voltage network (3) is designed to control the operation and therewith the power consumption of the network components (6 - 8) connected on the high-voltage network side and to determine the actual power consumption of the high-voltage network (3) and wherein the control device (14) of the at least one low-voltage network (4) is designed to control the operation and therewith the power consumption of the network components (9 -11) connected on the low-voltage network side, wherein the control device (13) of the high-voltage network (3) is furthermore configured in the case of a deficiency in power occurring during a charging procedure of the high-voltage battery (6) via the charging device (12) in the high-voltage network (3) to submit an item of information concerning the power deficiency in the high-voltage network (3) via the communication connection (15) to the control device (14) of the at least one low-voltage network (4), wherein the control device (14) of the at least one low-voltage network (4) is furthermore configured, taking into additional consideration at least one marginal condition concerning the power consumption of at least one of the network components (9 - 11) of the at least one low-voltage network (4) to reduce the power of at least one of the network components (9 - 11) of the at least one low-voltage network (4).

## Revendications

1. Procédé de fonctionnement d'une structure de réseau de bord d'un véhicule automobile (2), laquelle structure de réseau de bord (1) présente au moins deux réseaux électriques (3, 4) avec différentes tensions de réseau, dans lequel un réseau haute tension (3) pour l'alimentation en puissance d'au moins un réseau basse tension (4) avec une tension de réseau inférieure par rapport au réseau haute tension (3) fournit une quantité de puissance déterminée à l'au moins un réseau basse tension (4), dans lequel au moins un composant de réseau (6 - 11), en particulier un consommateur électrique, est raccordé à chaque réseau et le réseau haute tension (3) présente au moins une batterie haute tension (6) raccordée à celui-ci,
dans lequel
lors d'un défaut de puissance apparaissant pendant l'opération de charge de la batterie haute tension (6) dans le réseau haute tension (3), la puissance d'au moins un de l'au moins un composant de réseau (9 - 11) raccordé dans l'au moins un réseau basse tension et la quantité de puissance fournie par le réseau haute tension (3) à l'au moins un réseau basse tension (4) d'au moins un de l'au moins un composant de réseau (6 - 8) est réduite,
**caractérisé en ce que**
un dispositif de commande (13, 14) pour la commande des composants de réseau (6 - 11) et pour la détermination de la puissance consommée actuelle du réseau (3, 4) est associé à chaque réseau (3, 4), dans lequel le dispositif de commande (13) du réseau haute tension (3) fournit lors d'un défaut de puissance apparaissant pendant l'opération de charge de la batterie haute tension (6) dans le réseau haute tension (3) une information concernant le défaut de puissance dans le réseau haute tension (3) au dispositif de commande (14) de l'au moins un réseau basse tension (4), dans lequel le dispositif de commande (14) de l'au moins un réseau basse tension (4) réduit la puissance d'au moins un composant de réseau (9 - 11) du réseau basse tension (4) en tenant compte en plus d'au moins une condition marginale concernant la puissance consommée d'au moins un composant de réseau (9 - 11) du réseau basse tension (4).

2. Procédé selon la revendication 1,
**caractérisé en ce**
**que** des priorités attribuées par le dispositif de commande (14) aux composants de réseau (9 - 11) respectifs de l'au moins un réseau basse tension (4) sont utilisées en tant que condition marginale.

3. Procédé selon la revendication 2,
**caractérisé en ce**
**que** la priorisation a lieu en fonction d'une limitation de confort conditionnée par la réduction de puissance d'un ou plusieurs occupants de véhicule, dans lequel la puissance des composants de réseau (9 - 11) reliés à la plus grande réduction de confort est réduite en dernier.

4. Procédé selon l'une quelconque des revendications précédentes,
**caractérisé en ce**
**qu'**il est prévu en tant que condition marginale de ne pas décharger au moins une batterie basse tension (9) raccordée dans l'au moins un réseau basse tension (4).

5. Procédé selon l'une quelconque des revendications précédentes,
**caractérisé en ce**
**qu'**il est prévu pour la réduction de puissance dans au moins un réseau basse tension (4) de limiter le courant de charge d'au moins une batterie basse tension (9) raccordée dans l'au moins un réseau basse tension (4).

6. Procédé selon l'une quelconque des revendications précédentes,
**caractérisé en ce**
**que** la quantité de puissance libérée dans le réseau haute tension (3) par la réduction de la quantité de puissance fournie à l'au moins un réseau basse tension (4) est amenée à au moins un dispositif de refroidissement associé à au moins une batterie haute tension (6), raccordé dans le réseau haute tension (3) en tant que composant de réseau (7, 8).

7. Véhicule automobile, comprenant une structure de réseau de bord (1), un convertisseur DC/DC (5), un chargeur (12) et deux dispositifs de commande (13, 14) reliés l'un à l'autre par le biais d'une liaison de communication (15), dans lequel la structure de réseau de bord (1) présente au moins deux réseaux électriques (3, 4) avec différentes tensions de réseau, dans lequel par un réseau haute tension (3) pour l'alimentation en puissance d'au moins un réseau basse tension (4) une quantité de puissance déterminée fournit par le biais du transformateur DC/DC (5) à l'au moins un réseau basse tension (4),
dans lequel au moins un composant de réseau (6 - 11), en particulier un consommateur électrique, est raccordé à chaque réseau (3, 4) et le réseau haute tension (3) présente au moins une batterie haute tension (6) raccordée à celui-ci,
dans lequel
le véhicule automobile (2) est réalisé pour réduire lors d'un défaut de puissance apparaissant pendant l'opération de charge de la batterie haute tension (6) dans le réseau haute tension (3), la puissance d'au moins un de l'au moins un composant de réseau (9 - 11) raccordé dans l'au moins un réseau basse tension (4) et la quantité de puissance fournie par le réseau haute tension (3) à l'au moins un réseau basse tension (4) d'au moins un de l'au moins un composant de réseau (6 - 8),
**caractérisé en ce que**
un des dispositifs de commande (13, 14) pour la commande de l'au moins un composant de réseau (6 - 11) et pour la détermination de la puissance consommée actuelle du réseau (3, 4) est associé à chaque réseau (3, 4), dans lequel le dispositif de commande (13) du réseau haute tension (3) est réalisé pour la commande du fonctionnement et ainsi de la puissance consommée des composants de réseau (6 - 8) raccordés côté réseau haute tension et pour une détermination de la puissance consommée actuelle du réseau haute tension (3) et dans lequel le dispositif de commande (14) de l'au moins un réseau basse tension (4) est réalisé pour la commande du fonctionnement et ainsi de la puissance consommée des composants de réseau (9 - 11) raccordés côté réseau basse tension, dans lequel le dispositif de commande (13) du réseau haute tension (3) est réalisé en outre pour fournir lors d'un défaut de puissance apparaissant pendant une opération de charge de la batterie haute tension (6) par le biais du chargeur (12) dans le réseau haute tension (3) une information concernant le défaut de puissance dans le réseau haute tension (3) au dispositif de commande (14) de l'au moins un réseau basse tension (4) par le biais de la liaison de communication (15), dans lequel le dispositif de commande (14) de l'au moins un réseau basse tension (4) est réalisé en outre pour réduire la puissance d'au moins un des composants de réseau (9 - 11) de l'au moins un réseau basse tension (4) en tenant compte en plus d'au moins une condition marginale concernant la puissance consommée d'au moins un des composants de réseau (9 - 11) de l'au moins un réseau basse tension (4).
